# EUROPEAN PATENT APPLICATION

(11) **EP 3 573 418 A2**
(43) Date of publication of application: **27.11.2019**
(21) Application number: 19175893.7
(22) Date of filing: 22.05.2019
(51) Int. Cl.: H04W 76/10

(54) **METHOD OF ESTABLISHING ULTRA-RELIABLE TRANSMISSION AND USER EQUIPMENT AND SERVER USING THE SAME**

(30) Priority: 22.05.2018 US 201862674629 P
(71) Applicant: Industrial Technology Research Institute, 31040 Hsinchu (TW)
(72) Inventor: Lai, Chia-Lin, Tainan City 701 (TW); Tan, Tze-Jie, Hsinchu City 300 (TW)
(74) Representative: Becker, Eberhard

(57) **Abstract**

A method for establishing ultra-reliable transmission in a 5G communication network, which is adapted to a UE supporting a first radio access technology and a second radio access technology. The method includes: transmitting a request message to the 5G communication network, wherein the request message includes a multi-data-path indication; receiving setup information from the 5G communication network in response to transmitting the request message to the 5G communication network; and establishing a first data path according to the setup information.

## Description

### BACKGROUND

### Technical Field

The disclosure relates to a method for establishing an ultra-reliable transmission and a user equipment and a server using the same.

### Description of Related Art

In a fifth generation (5G) communication network, a user equipment (UE) may establish a Packet Data Unit (PDU) session to connect a Data Network (DN). As recorded in 3GPP TS 23.501, a User Plane Function (UPF) may distribute a user plane traffic to different IP anchor points (for example, UPF anchor points (UPF-A)). The UPF-As may aggregate and process the PDU sessions in a 5G Core Network (CN) and may be connected to the external DN. However, in the current specification, when the UE need to use an ultra-reliable transmission service, it is more difficult to achieve highly reliable transmission through a single data path (since packet drops may occur in the data path). Therefore, it is necessary to provide a method for establishing an ultra-reliable transmission when a UE requests a specific service.

### SUMMARY

The disclosure is directed to a method for establishing an ultra-reliable transmission and a user equipment (UE) and a server using the same.

The disclosure provides a method for establishing an ultra-reliable transmission in a 5G communication network, which is adapted to a UE supporting a first radio access technology and a second radio access technology. The method includes: transmitting a request message to the 5G communication network, wherein the request message includes a multi-data-path indication; receiving setup information from the 5G communication network in response to transmitting the request message to the 5G communication network; and establishing a first data path according to the setup information.

In an embodiment of the disclosure, the setup information includes a multi-data-path amount corresponding to the multi-data-path indication.

In an embodiment of the disclosure, the method further includes: transmitting a second request message corresponding to a second data path according to the multi-data-path amount, so as to establish the second data path, wherein the second request message does not include the multi-data-path indication, and the first data path corresponds to the first radio access technology and the second data path corresponds to the second radio access technology.

In an embodiment of the disclosure, the request message is a Packet Data Unit (PDU) session establishment request, and the setup information is included in an access network-specific resource setup.

In an embodiment of the disclosure, the first radio access technology is different to the second radio access technology.

In an embodiment of the disclosure, the first radio access technology corresponds to a 3^{rd} Generation Partner Plan (3GPP) access technology, and the second radio access technology corresponds to a non-3GPP access technology.

The disclosure provides a method for establishing an ultra-reliable transmission in a 5G communication network, which is adapted to a server. The method includes: receiving a request message from the 5G communication network, wherein the request message includes a multi-data-path indication; selecting a plurality of User Plane Functions (UPFs) according to the multi-data-path indication; generating setup information according to the UPFs, and transmitting the setup information to the 5G communication network, wherein the setup information includes includes a multi-data-path amount corresponding to the multi-data-path indication.

In an embodiment of the disclosure, the request message is a PDU session establishment request.

In an embodiment of the disclosure, the UPFs include a UPF corresponding to a 3GPP access technology and a UPF corresponding to a non-3GPP access technology.

In an embodiment of the disclosure, the server corresponds to a session management function in a 5G core network.

The disclosure provides a UE supporting a first radio access technology and a second radio access technology. The UE includes a transceiver and a processor. The processor is coupled to the transceiver, and is configured to at least execute steps of: transmitting a request message to a 5G communication network through the transceiver, wherein the request message includes a multi-data-path indication; receiving setup information from the 5G communication network through the transceiver in response to transmitting the request message to the 5G communication network; and establishing a first data path according to the setup information.

The disclosure provides a server including a transceiver and a processor. The processor is coupled to the transceiver, and is configured to at least execute steps of: receiving a request message from a 5G communication network through the transceiver, wherein the request message includes a multi-data-path indication; selecting a plurality of UPFs according to the multi-data-path indication; generating setup information according to the UPFs, and transmitting the setup information to the 5G communication network through the transceiver, wherein the setup information includes a multi-data-path amount corresponding to the multi-data-path indication.

Based on the above description, the UE of the disclosure may transmit the multi-data-path indication to notify the 5G communication network that the UE wants to establish the ultra-reliable transmission. A session management function (SMF) may configure one or a plurality of redundant data paths to the UE in response to the multi-data-path indication, so as to maintain high reliability of transmission between the UE and the DN.

To make the aforementioned more comprehensible, several embodiments accompanied with drawings are described in detail as follows.

### BRIEF DESCRIPTION OF THE DRAWINGS

FIG. 1 is a schematic diagram of a 5G communication network framework according to an embodiment of the disclosure.
FIG. 2 is a signalling diagram of a Session Management (SM) program adapted to the 5G communication network framework.
FIG. 3 to FIG. 5 are schematic diagrams of 5G communication network user plane frameworks for an uplink classifier (UL CL) and a multi-homed PDU session.
FIG. 6 is a schematic diagram of a single-data-path used for PDU session establishment.
FIG. 7 is a schematic diagram of multi-data-paths for one DN according to an embodiment of the disclosure.
FIG. 8 is a signaling diagram of establishing an ultra-reliable transmission through a PDU session establishment program according to an embodiment of the disclosure.
FIG. 9 is a schematic diagram of a UE according to an embodiment of the disclosure.
FIG. 10 is a flowchart illustrating a method for establishing an ultra-reliable transmission in the 5G communication network adapted to a UE according to an embodiment of the disclosure.
FIG. 11 is a schematic diagram of a server according to an embodiment of the disclosure.
FIG. 12 is a flowchart illustrating a method for establishing an ultra-reliable transmission in the 5G communication network adapted to a server according to an embodiment of the disclosure.

### DESCRIPTION OF THE EMBODIMENTS

In order to achieve an ultra-reliable transmission between a UE and a specific DN, UE may establish multi-data-path for the specific DN. When the UE triggers a PDU session establishment program to establish a connection with the specific DN, the UE may, by transmitting a multi-data-path indication, notify a 5G communication network that the UE wants to establish an ultra-reliable transmission. In an embodiment, the UE may register to a variety of different radio access technologies to connect to the 5G communication network, for example, communication technologies corresponding to a 3GPP access technology or a N3GPP access technology such as Long Term Evolution (LTE), New Radio (NR) or Wi-Fi, etc. The UE may respectively transmit the multi-data-path indication through different radio access technologies to establish a multi-data-paths PDU session. In an embodiment, the N3GPP access technology is, for example, a non-LTE or a new radio communication technology such as fiber-optic communication, wired communication, satellite communication, Bluetooth, Wi-Fi or ZigBee, etc.

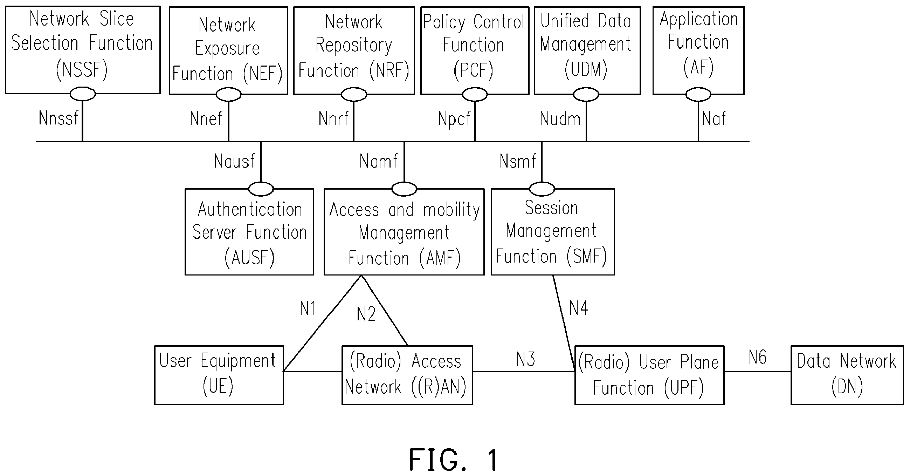

FIG. 1 is a schematic diagram of a 5G communication network framework according to an embodiment of the disclosure. In an embodiment, the terms used in the disclosure and the concepts corresponding to the terms are consistent or similar to those of 3GPP TS 23.501 and/or 3GPP TS 23.502, and the 5G communication network framework is, for example, the 5G communication network framework in 3GPP TS 23.501, but the disclosure is not limited thereto. As shown in FIG. 1, a 5G core network may include network functions such as a Network Slice Selection Function (NSSF), a Network Exposure Function (NEF), a Network Repository function (NRF), a Policy Control Function (PCF), a Unified Data Management function, an Authentication Server Function (ASF), an Access and Mobility Management Function (AMF), a session management function, or an application function, etc. A Control Plane (CP) of the 5G core network may be divided into Access and Mobility Management functions (AMF) and Session Management Functions (SMF), wherein an N1 interface is between the UE and the AMF, an N2 interface is between a (Radio) Access Network ((R)AN) and the AMF, an N3 interface is between the (R)AN and a UPF, an N4 interface is between the SMF and the UPF, and an N6 interface is between the UPF and the DN.

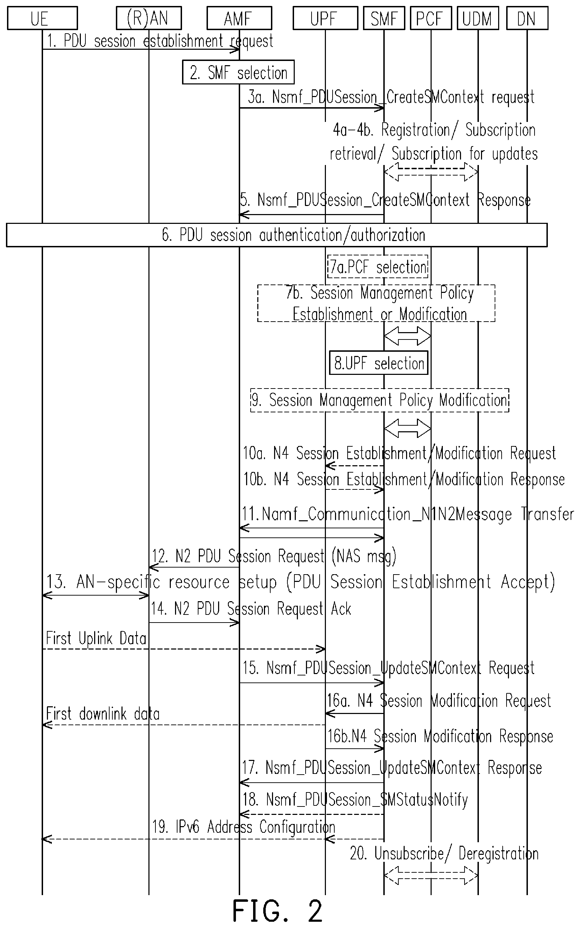

Before connecting the external DN, the UE first establishes the N1 interface for connecting the 5G communication network. FIG. 2 is a signalling diagram of a Session Management (SM) program adapted to the 5G communication network framework. In an embodiment, the SM program is, for example, recorded in the 3GPP TS 23.501 and TS 23.502 (especially under "4.3.2.2 UE request PDU session establishment" of TS 23.502). Each UE may request PDU session establishment used for accessing the external DN according to the SM program shown in FIG. 2. If the UE wants to establish the PDU session, the UE may send a related instruction to the core network to request the PDU session establishment. If the core network accepts the PDU session establishment, the UE may establish uplink data to the core network, and the core network establishes corresponding downlink data with the UE, thereby completing the PDU session establishment.

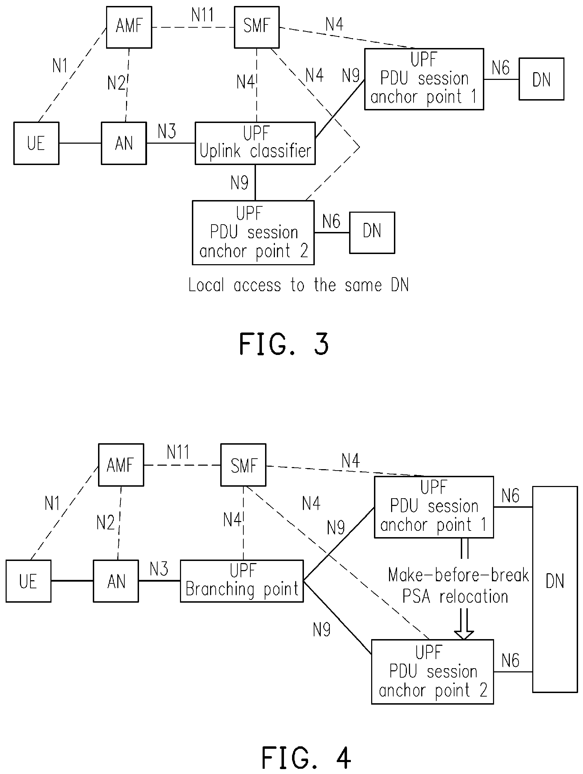

FIG. 3 to FIG. 5 are schematic diagrams of 5G communication network user plane frameworks for an uplink classifier (UL CL) and a multi-homed PDU session. In an embodiment, the 5G communication network user plane framework is, for example, the 5G communication network user plane framework recorded in the 3GPP TS 23.501 and TS 23.502 (especially under "5.6.4 single PDU session with multiple PDU session anchor points" of TS 23.501).

FIG. 3 illustrates a situation that the UPF having the UL CL inserted by SMF classifies a User Plane (UP) traffic coming from the UE based on the UL CL. The classified UP traffic is forwarded to the corresponding UPF-A and is then forwarded to the DN. The SMF may insert the UL CL to the UPF through the N4 interface. The UPF having the UL CL may classify, based on the UL CL, the UP traffic coming from the UE or an Access Network (AN), so as to forward the classified UP traffic, through the N9 interface, to the UPF serving as a PDU session anchor point 1 or the UPF serving as a PDU session anchor point 2.

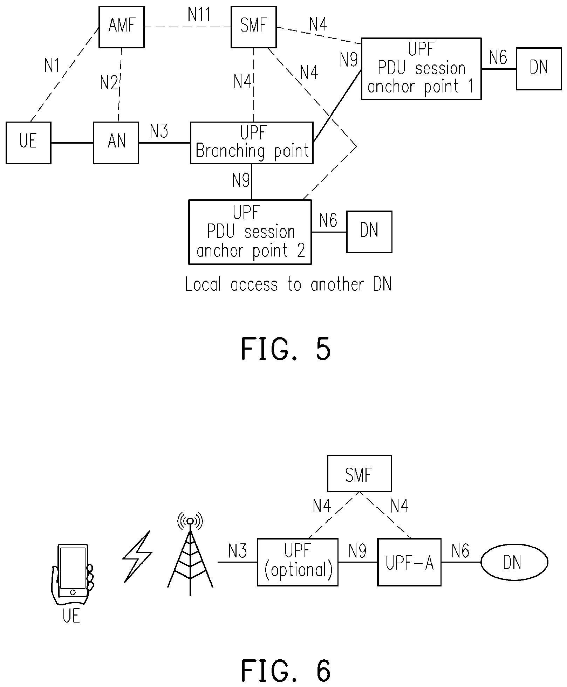

FIG. 4 illustrates a multi-homed PDU session using an IPv6 protocol supporting a service continuity mechanism, wherein one UPF may serve as a Branching Point (BP) to forward the UP traffic to the same DN through a plurality of different UPF-A (i.e. the PDU session anchor points (PSA)). For example, the UE may access the DN through one of the PDU session anchor point 1 and the PDU session anchor point 2. When the UE wants to hand over from the PDU session anchor point 1 to the PDU session anchor point 2, the service continuity mechanism adopts a make-before-break method to carry on the handover procedure of the UE in order to prevent disconnection of the UE and the DN. FIG. 5 is an example of using the multi-homed PDU session to distribute the UP traffic to the local DN. For example, the UE may respectively access different DNs providing the same service through the PDU session anchor point 1 and the PDU session anchor point 2, so as to disperse the UP traffic.

According to the above description, it is learned that the 5G communication network may establish multi-data-paths that are not visible to the UE to connect the UE and the specific DN. The UE may establish the PDU session with a single-data-path, as shown in FIG. 6. FIG. 6 is a schematic diagram of the single-data-path used for PDU session establishment. However, for a specific application in the UE, the UE may require to use the ultra-reliable transmission to establish not only a single-data-path for the PDU session to connect the DN. Based on the above description, the disclosure provides a method that allows the UE to connect to the DN through the multi-data-paths to meet the requirements of ultra-reliable transmission.

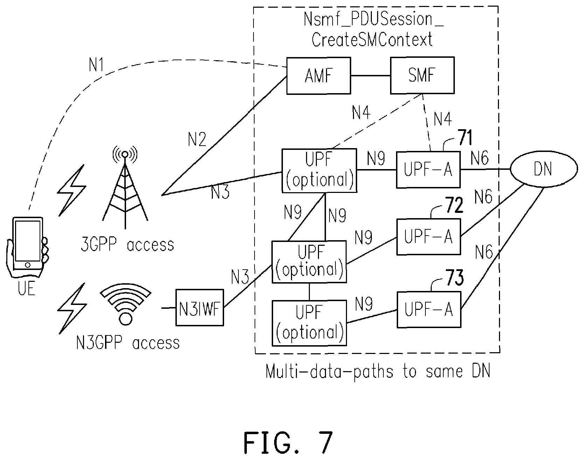

FIG. 7 is a schematic diagram of the multi-data-paths for one DN according to an embodiment of the disclosure. Referring to FIG. 7, the UE may simultaneously support two (or more) different radio access technologies (for example, the 3GPP access technology and the N3GPP access technology), and establish the multi-data-paths through the radio access technologies. A key of establishing the multi-data-paths for the DN is the number of UPF-As (i.e. UPF anchor points, which belong to one of a plurality of UPFs) selected by SMF. Since the UPF-A is an end point of the core network and may be directly connected to the DN located outside the core network, the number of the UPF-As may directly affect the number of the multi-data-paths that may be established.

In an embodiment, the number of the UPF-A required by an application for connecting the DN may be pre-configured in a Policy Control Function (PCF) shown in FIG. 1 or determined by the PCF. The application may directly or indirectly notify the PCF that the corresponding service requires to establish the ultra-reliable transmission. Therefore, when the UE sends a multi-data-path indication to the 5G communication network through, for example, an N1 interface to request the ultra-reliable transmission for the specific application, the SMF of the 5G communication network may learn from the PCF how many UPF-As are required to be selected for the UE. For example, when the UE executes a critical application, such critical application may trigger the UE to transmit a multi-data-path indication to the 5G communication network in a PDU session establishment program. The 5G communication network may obtain one or a plurality of UPF-As selected by the PCF from the PCF (not shown in the figure) based on the multi-data-path indication, and transmit the selected UPF-As to the SMF through the AMF, wherein the AMF and the SMF may perform data exchange through a service-based interface exhibited by SMF (Nsmf)_PDUsession_CreateSMContext. The SMF may establish the ultra-reliable transmission to the DN for the critical application according to the selected UPF-As. For example, the PCF may select a UPF 71, a UPF 72 and a UPF 73 shown in FIG. 7 and transmit the related information of the UPF 71, the UPF 72 and the UPF 73 to the SMF. The SMF may establish the ultra-reliable transmission between the UE and the DN according to the UPF 71, the UPF 72 and the UPF 73. In an embodiment, the UPF 71, UPF 72 and UPF 73 may be configured to forward a traffic corresponding to the 3GPP access technology and/or forward a traffic corresponding to the N3GPP access technology. Namely, the ultra-reliable transmission established based on the UPF 71, UPF 72 and UPF 73 allows the UE to communicate with the DN through different radio access technologies.

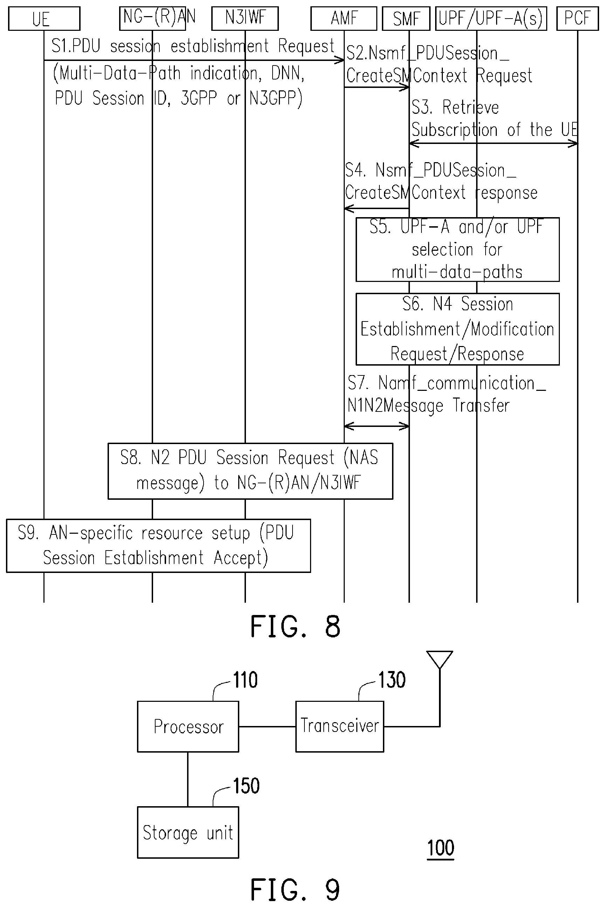

FIG. 8 is a signaling diagram of establishing the ultra-reliable transmission through the PDU session establishment program according to an embodiment of the disclosure.

In a step S1, the UE is triggered to transmit a PDU session establishment request to the 5G communication network, wherein the PDU session establishment request may be a Non-Access Stratum (NAS) message, and may include information for 3GPP/N3GPP accessing, such as a Data Network Name (DNN), a PUD session ID, a request type, an old PDU session ID) or an N1 SM container, etc. In an embodiment, in order to notify the 5G communication network that the UE wants to establish the ultra-reliable transmission, the PDU session establishment request may further include a multi-data-path indication, wherein the multi-data-path indication is used for indicating that the UE wants to establish the ultra-reliable transmission.

The UE may support a plurality of different radio access technologies, for example, the 3GPP access technology (for example, a licensed network) and/or the N3GPP access technology (for example, a non-licensed network). The UE may transmit the PDU session establishment request to the 5G communication network through a Next Generation Radio Access Network/Next Generation Access Network (NG-(R)AN) based on the 3GPP access technology, and/or transmit the PDU session establishment request to the 5G communication network through a Non-3GPP Interworking Function (N3IWF) based on the N3GPP access technology.

For example, if the application executed by the UE requires a reliable transmission, the application may trigger the UE to add the multi-data-path indication to the PDU session establishment request for the specific DN, so as to notify the 5G communication network that the UE is required to establish the ultra-reliable transmission to the DN due to the application. On the other hand, if the UE only wants to establish an ordinary PDU session without using the ultra-reliable transmission, the PDU session establishment request may not include the multi-data-path indication.

In a step S2, after the AMF receives, from the 5G communication network, the PDU session establishment request coming from the UE, the AMF extracts information associated with a Session Management Non-Access Stratum (SM NAS) from the PDU session establishment request, wherein the information indicates the multi-data-paths to be established by the UE for the specific DN (i.e. the ultra-reliable transmission to be established for the specific DN). Then, the AMF may forward the information to the SMF through an Nsmf_PDUSession_CreateSMContext request. The SMF may receive the information to learn that the UE wants to establish the ultra-reliable transmission to the specific DN. The aforementioned information may further include SM related parameters such as Subscription Permanent Identifier (SUPI), a data network name, Single Network Slice Selection Assistance Information (S-NSSAI), an AMF ID, a request type, a PCF ID, priority access, an N1 SM container (for example, the PDU session establishment request), user location information, an access type, a permanent equipment identifier (PEI), a Generic Public Subscription Identifier (GPSI), a UE presence in LAND service area, a PDU session status notification, a DNN selection mode, or a trace requirement, etc. In other words, the information indicating that the UE wants to establish the ultra-reliable transmission to the specific DN may be regarded as one of the SM related parameters.

In a step S3, the SMF retrieves the SM related parameters from the Nsmf_PDUSession_CreateSMContext request, and retrieves a subscription of the UE from the PCF to determine whether the UE may establish the multi-data paths through the PDU session. The subscription of the UE may be pre-configured by the PCF through previous UE registration for the 5G communication network. The Nsmf_PDUSession_CreateSMContext request is, for example, a SM NAS request. The SMF may determine whether the multi-data paths are supported. For example, the SMF may determine whether the UE has a permission to use the multi-data paths.

In a step S4, the SMF transmits an Nsmf_PDUSession_CreateSMContext response to the AMF, so as to notify the AMF whether the multi-data paths are supported.

In a step S5, the SMF selects one or a plurality of UPF-As (i.e. UPF anchor points, which belong to one of a plurality of UPFs) and/or one or a plurality of UPFs for the UE according to the multi-data-path indication of the UE. If the UE does not add the multi-data-path indication to the PDU session establishment request, the SMF selects a UPF-A and/or a UPF used for establishing a single data path for the UE. On the other hand, if the UE has added the multi-data-path indication to the PDU session establishment request, the SMF may determine the number of the data paths to be established for the UE, and select one or a plurality of UPF-As and/or one or a plurality of UPFs corresponding to the data paths for the UE, wherein the UPF-As may be used for establishing the multi-data-paths between the UE and the specific DN.

After the UPF-As and/or the UPFs are selected, the SMF configures CN tunnel information according to the selected UPF-As and/or UPFs. The configured CN tunnel information is forwarded to the NG-(R)AN or N3IWF through an N2 message for establishing the data paths corresponding to the PDU session establishment request of the UE. Moreover, the SMF may also apply a 5G communication network user plane framework shown in FIG. 3 to FIG. 5. The SMF may configure an uplink, a downlink or multi-homed selected UPF-As and/or UPFs through the N4 interface to establish the multi-data paths between the UE and the DN that are requested by the UE.

In a step S6, the SMF configures N4 session establishment for the selected UPF-As and/or the UPFs. To be specific, the SMF may transmit an N4 session establishment (or modification) request to the UPF-As and/or UPFs selected by the SMF to notify the UPF-As and/or UPFs that they are used for a path of a newly established session requested by the SMF through N4, or used for a path of a modified session requested by the SMF through N4. After the N4 session establishment (or modification) request is received, the UPF-As and/or the UPFs may transmit a N4 session establishment (or modification) response to the SMF.

In a step S7, the AMF and the SMF exchanges information. To be specific, the AMF and the SMF may exchange information through a Namf_Communication_N1N2MessageTransfer message. The AMF may store information related to the SMF (SM information, for example, a Tunnel Endpoint ID (TEID)), and the SMF may store information related to the UE served by the AMF. The aforementioned information includes setup information, wherein the setup information includes a multi-data-path amount corresponding to the PDU session establishment request of the UE and the DNN, wherein the multi-data-path amount indicates the number of the data paths established by the UE for the DN, and the multi-data-path amount may be equal to or less than the required multi-data-paths mentioned in the step S1. In an embodiment, the SMF further transmits the information of the UPF-As and/or the UPFs selected by the SMF to the AMF.

In a step S8, the AMF forwards the information including the setup information that is retrieved in the step S7 to the NG-(R)AN and/or the N3IWF through an N2 PDU session request, wherein the N2 PDU session request is, for example, an NAS message.

In a step S9, the UE receives the setup information from the NG-(R)AN and/or the N3IWF, wherein the setup information is, for example, included in an AN-specific resource setup message or a PDU session establishment accept message, and the setup information may include the multi-data-path amount and/or the DNN provided by the SMF through the AMF and the N2 PDU session request. Therefore, the UE may establish data transmission with the specific DN according to the setup information. In brief, the SMF may forward the setup information including the multi-data-path amount and the DNN to the UE through the messages transmitted by the network entities such as AMF, PCF, NG-(R)AN and N3IWF.

Based on the multi-data-path amount configured by the SMF and some existing information of the UE (for example, the DNN, the PDU session ID, the request type, the old PDU session ID, the N1 SM container or the 3GPP/N3GPP access, etc.), the UE may repeatedly trigger the PDU session establishment program shown in FIG. 8 (or the SM program shown in FIG. 2), until the paths of the multi-data-path amount determined by the SMF are established. It should be noted that, after the UE obtains the multi-data-path amount configured by the SMF, during the PDU session establishment program again executed by the UE according to the multi-data-path amount, the UE is unnecessary to transmit the multi-data-path indication, and the UE is unnecessary to receive the multi-data-path amount again.

For example, if the UE wants to establish an ultra-reliable transmission for a specific DN for service of a specific application, the UE may transmit the PDU session establishment request including the multi-data-path indication to the 5G communication network. Then, the SMF may select, based on the multi-data-path indication of the UE, one or a plurality of UPF-As and/or one or a plurality of UPF used for establishing the multi-data paths for the UE. Then, the SMF may transmit information such as the multi-data-path amount and the DNN corresponding to the UPF-As and the UPFs selected by the SMF to the UE through the 5G communication network. After the setup information including said information is received, the UE may establish a first data path to the specific DN according to the setup information. It is assumed that the multi-data-path amount indicates that the UE may establish N data paths and N is a positive integer greater than 1, after the first data path is established, the UE may again transmit the PDU session establishment request not including the multi-data-path indication to the 5G communication network according to the multi-data-path amount, and receive the setup information not including the multi-data-path amount in response to the PDU session establishment request, so as to establish a second data path according to the setup information, wherein the first data path and the second data path may respectively correspond to different ratio access technologies, for example, the first data path may correspond to the 3GPP radio access technology, and the second data path may correspond to the N3GPP radio access technology. By repeatedly transmitting the PDU session establishment request and receiving the setup information, the UE may establish N data paths through at least two radio access technologies, as that configured by the SMF.

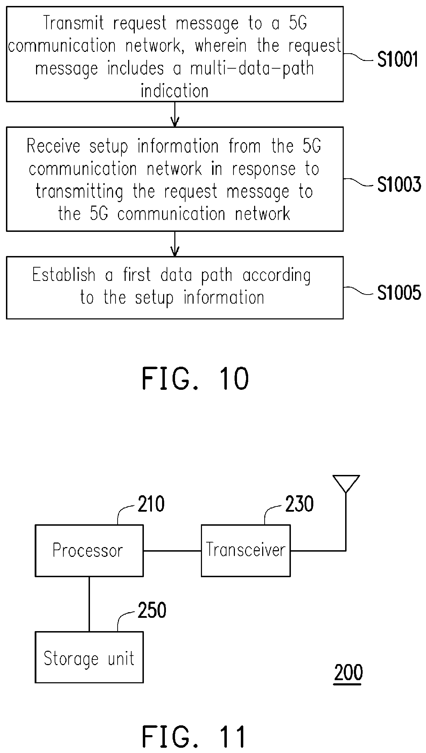

FIG. 9 is a schematic diagram of a UE 100 according to an embodiment of the disclosure, wherein the UE 100 is at least configured to implement the UE shown in FIG. 8 or execute a method shown in FIG. 10. The UE 100 is, for example, any type of electronic device having a SIM card or supporting the 5G communication network. The UE 100 includes (but is not limited to) a processor 110, a transceiver 130 and a storage unit 150, and at least supports a first radio access technology and a second radio access technology, wherein the first radio access technology is different to the second radio access technology. The first radio access technology, for example, corresponds to the 3GPP access technology, and the second radio access technology, for example, corresponds to the N3GPP access technology, but the disclosure is not limited thereto.

The processor 110 is, for example, a Central Processing Unit (CPU), or other programmable general purpose or special purpose microprocessor, a Digital Signal Processor (DSP), a programmable controller, an Application Specific Integrated Circuit (ASIC), a Graphics Processing Unit (GPU) or other similar components or a combination of the above components.

The transceiver 130 is coupled to the processor 110. The transceiver 130 may transmit an uplink signal and receive a downlink signal. The transceiver 130 may execute operations of Low Noise Amplifying (LNA), impedance matching, frequency mixing, up-down frequency conversion, filtering, amplifying and/or similar operations. The transceiver 130 may further includes an antenna array, and the antenna array may include one or a plurality of antennas for transmitting and receiving omnidirectional antenna beams or directional antenna beams.

The storage unit 150 is coupled to the processor 110, and is, for example, any type of a fixed or movable Random Access Memory (RAM), a Read-Only Memory (ROM), a flash memory, a Hard Disk Drive (HDD), a Solid State Drive (SSD), or similar components or a combination of the above components. The storage unit 150 stores a plurality of modules or programs for the processor 110 to access, such that the processor 110 may execute various functions of the UE 100.

The processor 110 is at least configured to implement the UE shown in FIG. 8 or execute the method shown in FIG. 10. In an embodiment, the processor 110 is at least configured to execute a method for establishing an ultra-reliable transmission in the 5G communication network, and the method at least includes: transmitting a request message to the 5G communication network through the transceiver 130, wherein the request message includes a multi-data-path indication; receiving setup information from the 5G communication network through the transceiver 130 in response to transmitting the request message to the 5G communication network; and establishing a first data path according to the setup information.

FIG. 10 is a flowchart illustrating a method for establishing an ultra-reliable transmission in the 5G communication network adapted to the UE 100 according to an embodiment of the disclosure. In a step S1001, a request message is transmitted to the 5G communication network, wherein the request message includes a multi-data-path indication. In a step S1003, setup information is received from the 5G communication network in response to transmitting the request message to the 5G communication network. In a step S1005, a first data path is established according to the setup information.

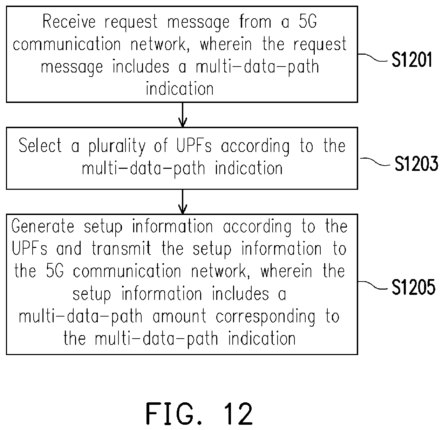

FIG. 11 is a schematic diagram of a server 200 according to an embodiment of the disclosure, wherein the server 200 is at least configured to implement the SMF shown in FIG. 8 or execute a method shown in FIG. 12. The server 200 includes (but is not limited to) a processor 210, a transceiver 230 and a storage unit 250.

The processor 210 is, for example, a CPU, or other programmable general purpose or special purpose microprocessor, a DSP, a programmable controller, an ASIC, a GPU or other similar components or a combination of the above components.

The transceiver 230 is coupled to the processor 210. The transceiver 230 may transmit a downlink signal and receive an uplink signal. The transceiver 230 may execute operations of LNA, impedance matching, frequency mixing, up-down frequency conversion, filtering, amplifying and/or similar operations. The transceiver 230 may further includes an antenna array, and the antenna array may include one or a plurality of antennas for transmitting and receiving omnidirectional antenna beams or directional antenna beams.

The storage unit 250 is coupled to the processor 210, and is, for example, any type of a fixed or movable RAM, a ROM, a flash memory, an HDD, an SSD, or similar components or a combination of the above components. The storage unit 250 stores a plurality of modules or programs for the processor 210 to access, such that the processor 210 may execute various functions of the server 200.

The processor 210 is at least configured to implement the SMF shown in FIG. 8 or execute the method shown in FIG. 12. In an embodiment, the processor 210 is at least configured to execute a method for establishing an ultra-reliable transmission in the 5G communication network, and the method at least includes: receiving a request message from the 5G communication network through the transceiver 230, wherein the request message includes a multi-data-path indication; selecting a plurality of UPFs according to the multi-data-path indication; and generating setup information according to the UPFs and transmitting the setup information to the 5G communication network through the transceiver 230, wherein the setup information includes a multi-data-path amount corresponding to the multi-data-path indication.

FIG. 12 is a flowchart illustrating a method for establishing an ultra-reliable transmission in the 5G communication network adapted to the server 200 according to an embodiment of the disclosure. In a step S1201, a request message is received from the 5G communication network, wherein the request message includes a multi-data-path indication. In a step S1203, a plurality of UPFs is selected according to the multi-data-path indication. In a step S1205, setup information is generated according to the UPFs and the setup information is transmitted to the 5G communication network, wherein the setup information includes a multi-data-path amount corresponding to the multi-data-path indication.

In summary, the UE of the disclosure may transmit the multi-data-path indication to notify the 5G communication network that the UE wants to establish the ultra-reliable transmission. The SMF may determine whether to distribute a plurality of UPF anchor points to the UE to establish multi-data-paths corresponding to different types of radio access technologies in response to the multi-data-path indication. The multi-data-paths corresponding to different types of radio access technologies provide one or a plurality of redundant data paths to the UE, so as to maintain reliable transmission between the UE and the DN. After the SMF transmits the multi-data-path amount to the UE, the UE may repeatedly execute the session establishment program to establish the data paths with the DN according to the multi-data-path amount, until enough number of the data paths are established. Different to the conventional 5G communication technology, the UE of the disclosure may implement data transmission with the DN through two (or more) radio access technologies at the same time. Therefore, when one radio access technology becomes unavailable for any reason, there is still a data path based on another radio access technology available between the UE and the DN.

The present disclosure has been disclosed in the above embodiments, but it is not intended to limited the disclosure, alternations and refinements can be made by those skilled in the art without departing from the spirits and scope of the disclosure. Therefore, the scope of the disclosure is defined by the claims as attached.

### Symbol Description

100: user equipment
110, 210: processor
130, 230: transceiver
150, 250: storage unit
200: server
71, 72, 73: UPF
N1, N2, N3, N4, N5, N6, N9, N11: interface
S1, S2, S3, S4, S5, S6, S7, S8, S9, S1001, S1003, S1005, S1201, S1203, S1205: step

## Claims

1. A method for establishing an ultra-reliable transmission in a 5G communication network, **characterised by**, the method is adapted to a user equipment (100) supporting a first radio access technology and a second radio access technology, the method comprising:
transmitting a request message to the 5G communication network, wherein the request message comprises a multi-data-path indication (S1, S1001);
receiving setup information from the 5G communication network in response to transmitting the request message to the 5G communication network (S9, S1003); and
establishing a first data path according to the setup information (S1005).

2. The method for establishing the ultra-reliable transmission in the 5G communication network as claimed in claim 1, wherein the setup information comprises a multi-data-path amount corresponding to the multi-data-path indication, the request message is a PDU session establishment request, and the setup information is included in an access network-specific resource setup.

3. The method for establishing the ultra-reliable transmission in the 5G communication network as claimed in claim 2, further comprising:
transmitting a second request message corresponding to a second data path according to the multi-data-path amount, so as to establish the second data path, wherein the second request message does not comprise the multi-data-path indication, and the first data path corresponds to the first radio access technology and the second data path corresponds to the second radio access technology.

4. The method for establishing the ultra-reliable transmission in the 5G communication network as claimed in claim 1, wherein the first radio access technology is different to the second radio access technology.

5. The method for establishing the ultra-reliable transmission in the 5G communication network as claimed in claim 4, wherein the first radio access technology corresponds to a 3GPP access technology, and the second radio access technology corresponds to a non-3GPP access technology.

6. A method for establishing an ultra-reliable transmission in a 5G communication network, **characterised by**, the method is adapted to a server (200), and the method comprises:
receiving a request message from the 5G communication network, wherein the request message comprises a multi-data-path indication (S2, S1201);
selecting a plurality of User Plane Functions (UPFs) according to the multi-data-path indication (S5, S1203); and
generating setup information according to the UPFs, and transmitting the setup information to the 5G communication network (S7, S1205), wherein the setup information comprises includes a multi-data-path amount corresponding to the multi-data-path indication.

7. The method for establishing the ultra-reliable transmission in the 5G communication network as claimed in claim 6, wherein the request message is a PDU session establishment request.

8. The method for establishing the ultra-reliable transmission in the 5G communication network as claimed in claim 6, wherein the UPFs comprise a UPF corresponding to a 3GPP access technology and a UPF corresponding to a non-3GPP access technology.

9. The method for establishing the ultra-reliable transmission in the 5G communication network as claimed in claim 6, wherein the server (200) corresponds to a session management function in a 5G core network.

10. A user equipment (100), **characterised by**, the user equipment (100) supports a first radio access technology and a second radio access technology, and the user equipment (100) comprising:
a transceiver (130); and
a processor (110), coupled to the transceiver (130), and the processor (110) is configured to at least execute:
transmitting a request message to a 5G communication network through the transceiver (130), wherein the request message comprises a multi-data-path indication;
receiving setup information from the 5G communication network through the transceiver (130) in response to transmitting the request message to the 5G communication network; and
establishing a first data path according to the setup information.

11. The user equipment (100) as claimed in claim 10, wherein the setup information comprises a multi-data-path amount corresponding to the multi-data-path indication, the request message is a PDU session establishment request, and the setup information is included in an access network-specific resource setup.

12. The user equipment (100) as claimed in claim 11, wherein the processor (110) is further configured to execute:
transmitting a second request message corresponding to a second data path according to the multi-data-path amount, so as to establish the second data path, wherein the second request message does not comprise the multi-data-path indication, and the first data path corresponds to the first radio access technology and the second data path corresponds to the second radio access technology.

13. The user equipment (100) as claimed in claim 10, wherein the first radio access technology is different to the second radio access technology, the first radio access technology corresponds to a 3GPP access technology, and the second radio access technology corresponds to a non-3GPP access technology.

14. A server (200), **characterised by** comprising:
a transceiver (230); and
a processor (210), coupled to the transceiver (230), the processor (210) is configured to at least execute:
receiving a request message from a 5G communication network through the transceiver (230), wherein the request message comprises a multi-data-path indication;
selecting a plurality of UPFs according to the multi-data-path indication; and
generating setup information according to the UPFs, and transmitting the setup information to the 5G communication network through the transceiver, wherein the setup information comprises a multi-data-path amount corresponding to the multi-data-path indication.

15. The server (200) as claimed in claim 14, wherein the request message is a PDU session establishment request, the UPFs comprise a UPF corresponding to a 3GPP access technology and a UPF corresponding to a non-3GPP access technology, and the server (200) corresponds to a session management function in a 5G core network.
